# EUROPEAN PATENT APPLICATION

(11) **EP 1 279 331 A1**
(43) Date of publication of application: **29.01.2003**
(21) Application number: 01929658.1
(22) Date of filing: 04.05.2001
(51) Int. Cl.: A01K 11/00

(54) **EAR TAG ADAPTABLE DEVICE FOR TAKING SAMPLES TO IDENTIFY CATTLE BY MEANS OF DNA**

(30) Priority: 05.05.2000 ES 200001171
(71) Applicant: Universidad De Oviedo, 33003 Oviedo (ES); Empresa Asturiana De Servicios Agrarios "EASA", 33208 Gijon (ES)
(72) Inventor: DOMINGUEZ SANJURJO, Ana, E-33003 Oviedo (ES); PEREZ MENDEZ, Trinidad, E-33003 Oviedo (ES); FERNANDEZ FERNANDEZ, Maria, E-33003 Oviedo (ES); ALBORNOZ PONS, Jesus, 33003-Oviedo (ES)
(74) Representative: Elzaburu, Alberto de
(86) International application number: ES0100172
(87) International publication number: WO01087054

(57) **Abstract**

Device for collecting samples for the DNA identification of livestock, adaptable to the ear tag. The device consists of a strip of filter paper attached to the piece of the ear tag bearing the punch and surrounding its base. The device collects the blood emerging from the wound produced when tagging. After the blood has dried, it can be used for identification or other genetic analyses. Applicable to collecting samples for DNA analysis simultaneously to ear tagging.

## Description

### Technical field

This invention is related to methods for the tagging and identification of livestock and to the analytical methods for guaranteeing the traceability of dressed carcasses and meat products. The invention is also related to devices and methods for collecting and storing blood samples for genetic analysis. The device allows blood sample recovery simultaneously to ear tagging.

### Background Art

At present, traceability of meat products is guaranteed through the physical tagging of animals as well as the tagging of carcasses and pieces of meat during the distribution process.

The ear tag is a device generally used for livestock identification. The most common models are made of plastic and bear an identification number. They are punched into the animal ear and are designed in such a way that it is impossible to take the tag out of one animal and re-attach it to the same or another animal.

The collection of blood samples on an absorbent material is common. An example is the neonatal phenylketonuria test. A drop of blood from the newborn child is collected on cellulose paper and is allowed to dry before being sent to the laboratory for testing.

Genetic identification methods have been greatly improved over the last few years. They are based on the determination of an individual's genotype for a sufficient number of hypervariable loci so as to be sure that no other individual will share that genotype. Genotype determination for the appropriate loci is usually performed by polymerase chain reaction (PCR), a technique that enables the analysis to be made using minimal amounts of sample material (i.e. a hair, a drop of blood, etc).

### Brief description of the drawings

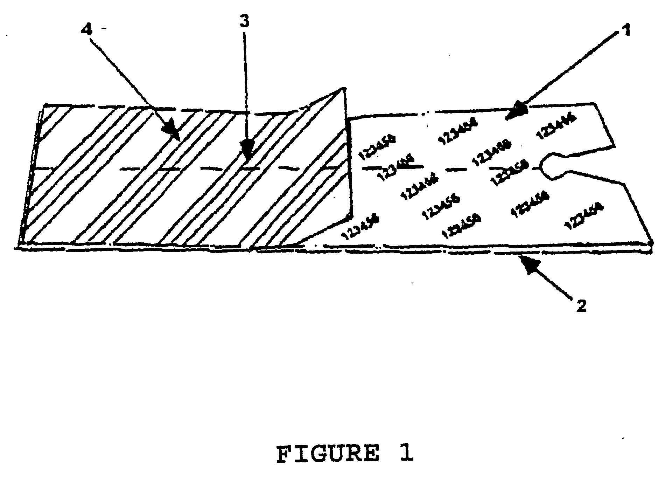

Figure 1.- is a lateral view of the invention device. The most important elements are shown: 1) filter paper, 2) plastic layer, 3) perforated line, 4) adhesive area with flap

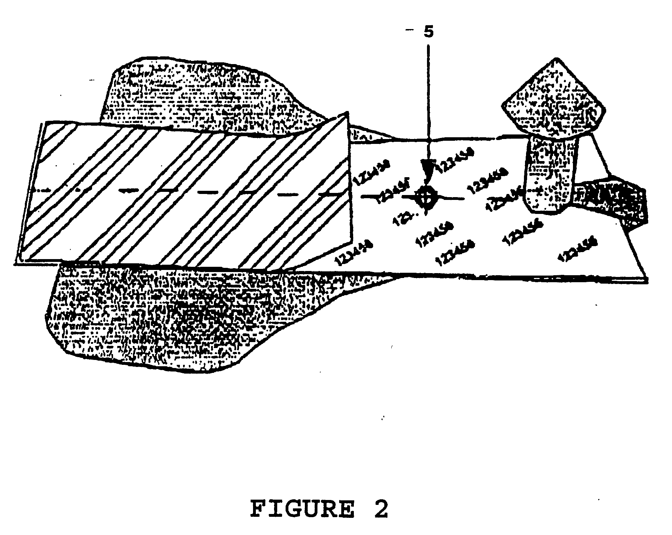

Figure 2.- shows the device attached to the ear tag.

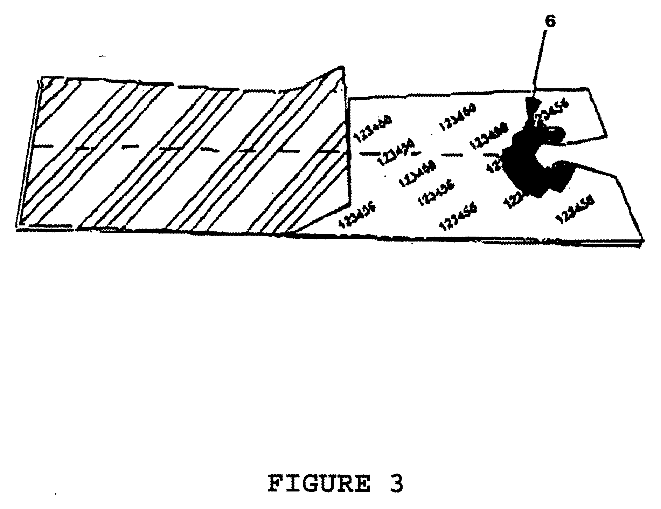

Figure 3.- shows the device containing a blood sample (6), after ear tagging.

### Disclosure of the invention

DNA fingerprinting is immutable with time and can be obtained from any part of the animal; hence it enables complete traceability from individual tagging to carcass commercialisation and end meat suppliers.

The invention consists of a device adaptable to the ear tag that allows the collection of blood samples simultaneously to tagging. The device involves a strip of filter paper attached to the piece of the ear tag bearing the punch and surrounding its base. It collects the blood emerging from the wound caused by the ear tag. After drying, the blood sample can be used for genetic identification or other laboratory analyses. It can be primarily applied for the PCR-based analysis of DNA, such as identity and/or paternity tests based on microsatellites, detection of deleterious genes or of genes determining unwanted phenotypic traits. This device allows blood sampling and ear-tagging of livestock in a single action.

The invented device consists of a layer of Whatman paper or another absorbent material (1) attached to the part of the ear tag that bears the punch either by sticking or a rivet (5). The paper surrounds the punch element and absorbs the blood emerging from the wound produced when tagging. The absorbent paper is reinforced on the side in contact with the ear-tag by a layer of plastic or other material (e.g. textile) hard enough so as to allow the device to be pulled out from the ear tag without being broken. The device has a perforated line (3) that allows it to be easily split into two halves that can be kept in separate files. Each half of the strip of absorbent material is identified by the same printed design or by the same number or bar code as the ear tag. The device has an adhesive area protected by a flap (4) that allows it to be stuck, for example, to the registration card for filing.

The device does not require sealing because it has a printed design which allows checking that the two halves match. This match can be further checked by the blood spot (6) constituting the sample.

Since this device is attached to the ear tag, it allows the collection of blood samples in the same action as the tagging of the animal. The simultaneous performance of these two operations saves money and avoids errors.

If fortuitously the device does not collect any blood when tagging, it should be used to collect oral epithelial cells to be used for the DNA analysis instead of blood.

## Claims

1. Ear tag for DNA identification of livestock, the ear tag being **characterised by** having an attached device that allows the collection of a sample of blood and/or oral epithelial cells simultaneously to tagging.

2. Ear tag as in Claim 1, wherein the device consists of a strip (1) of absorbent material, preferably paper, arranged at least around the piece of the ear tag with the punch that goes through the animal's skin.

3. Ear tag as in Claims 1 and 2, wherein the layer of absorbent material is attached to the ear tag at least by one point (5) and at least its face in contact with the ear-tag is reinforced by a layer preferably of plastic material.

4. Ear tag according to claims 1 to 3, wherein the strip of absorbent material is divided into at least two parts, preferably by a perforated line (3), each part identified by a code or a printed design matching the one on the ear tag.

5. Ear tag according to claims 1 to 4, wherein the strip of absorbent material has an adhesive area protected by a flap (4).

6. Ear tag according to any one of claims 1 to 5, wherein the DNA of the animal can be analysed, after tagging, from the samples collected by the sampling device.
